# EUROPEAN PATENT APPLICATION

(11) **EP 2 031 322 A2**
(43) Date of publication of application: **04.03.2009**
(21) Application number: 08013398.6
(22) Date of filing: 25.07.2008
(51) Int. Cl.: F24J 2/10, F24J 2/14, G02B 1/10, C23C 22/56

(54) **A reflecting parabolic construction for solar heating systems**

(30) Priority: 29.08.2007 IT mi20071702
(71) Applicant: Xeliox S.R.L., 24030 Medolago (IT)
(72) Inventor: Donati, Francesco, 24030 Medolago (Bergamo) (IT); Donati, Giuseppe, 24030 Medolago (Bergamo) (IT)
(74) Representative: Cicogna, Franco

(57) **Abstract**

A reflecting parabolic construction for solar heating systems comprises at least a reflecting parabola (2) for concentrating solar beams on a thermal carrier containing receiver tube (3), wherein the parabola comprises an aluminium fretted central layer (21), on the faces thereof two opposite aluminium layers (22) are applied. According to a first embodiment, in the concave part of the reflecting parabolic construction a crystal mirror of minimum thickness is applied. According to a further aspect of the invention, one of the layers is a reflecting aluminium layer made by depositing vapors, and protected by a sol-gel protective layer (23) having a thickness corresponding to few microns.

## Description

### BACKGROUND OF THE INVENTION

The present invention relates to a reflecting parabolic construction designed for concentrating solar radiations to be used in heating systems.

Systems exploiting different technologies or methods for collecting an concentrating solar radiation are already commercially available.

The most diffused technologies relate to the linear parabolic collectors, which are so designed as to cause the solar beams to be converged toward a collector, including a diathermal fluid operating as a heat accumulator.

Prior methods or technologies, however, have not provided optimum results, because of the need of making, for carrying out them, very heavy and complex structures.

### SUMMARY OF THE INVENTION

Accordingly, the aim of the present invention is to overcome the above mentioned problems, by providing a reflecting construction, to be used in solar energy concentrating systems, which reflect construction has a very broad reflecting surface.

Within the scope of the above mentioned aim, a main object of the invention is to provide such a construction of small weight and making and installing cost.

Another object of the present invention is to provide such a construction which is very reliable and safe in operation and can be made with any desired parabolic geometries or shapes.

Yet another object of the present invention is to provide such a construction which can be easily made and which, moreover, is very competitive from a mere economic standpoint.

According to one aspect of the present invention, the above mentioned aim and objects, as well as yet other objects, which will become more apparent hereinafter, are achieved by a reflecting parabolic construction for concentrating solar radiation, characterized in that said construction comprises a parabola including an aluminium fretted central layer having two opposite faces thereon are applied two opposite aluminium layers.

According to a first embodiment of the invention; to the concave part of said parabola a crystal mirror having a very small thickness (less than 1 mm) is applied.

According to a further aspect of the invention, one of the reflecting aluminium layers is made by depositing vapors and is protected by a sol-gel protective layer having a thickness of few microns.

### BRIEF DESCRIPTION OF THE DRAWINGS

Further characteristics and advantages of the present invention will become more apparent hereinafter from the following detailed disclosure of a preferred, though not exclusive, embodiment of a reflecting parabolic construction, which is shown, by way of an indicative, but not limitative example, in the accompanying drawings, where:

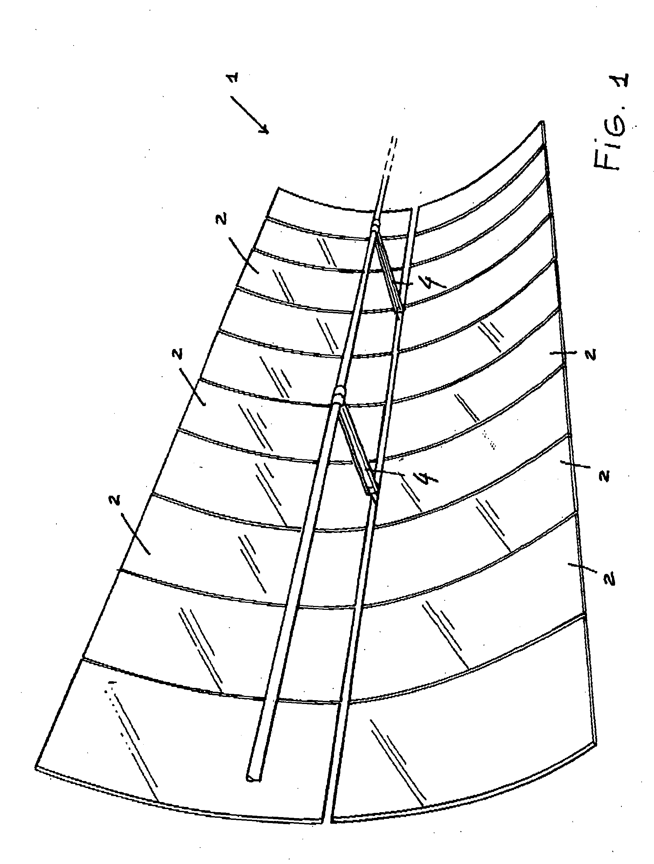

Figure 1 is a schematic perspective view showing the reflecting parabolic construction according to the invention;

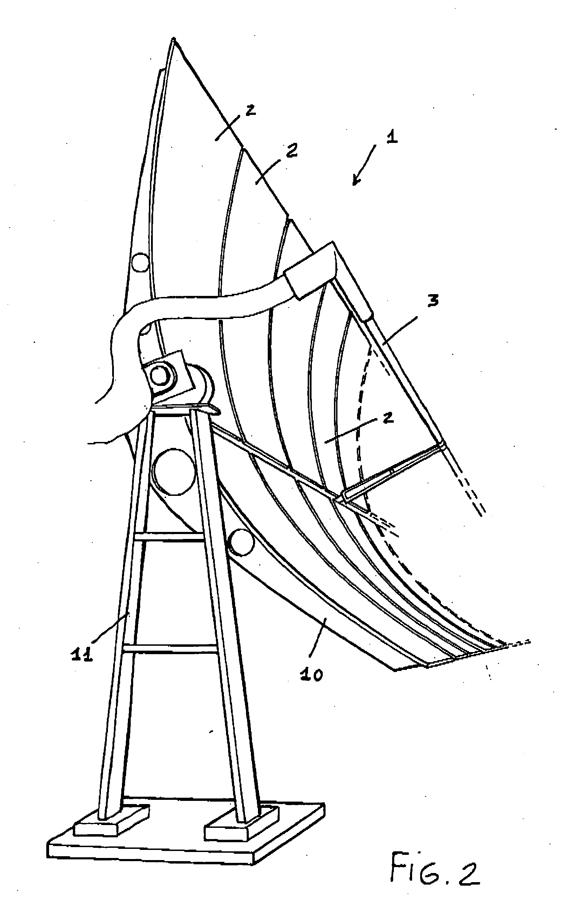

Figure 2 shows a possible configuration of the subject construction including supporting elements therefor; and
Figure 3 is a schematic cross-sectional view showing the parabolic mirror structure.

### DESCRIPTION OF THE PREFERRED EMBODIMENTS

With reference to the number references of the above mentioned figures, the reflecting parabolic construction according to the present invention, which has been generally indicated by the reference number 1. comprises a plurality of linear parabolic mirrors 2, which extend for a preset length, thereby concentrating solar beams on a receiving tube 3 holding a thermal carrier fluid therein.

In particular, the tube 3 is supported by supporting arms 4 for connecting said tube to said linear parabolic mirrors and, moreover, said mirrors being in turn supported by rear brackets 10 allowing them to be coupled to supporting stands 11 for connecting to the ground.

Said parabolic mirrors are further connected to conventional driving means, designed for changing the inclination of the mirrors depending on the sun position in the sky.

The reflecting parabolic construction according to the present invention can be made at least in two different embodiments:

According to a first embodiment, the reflecting parabola comprises a central aluminium fretted layer, on the opposite faces thereof are applied two respective aluminium layers, a very small thickness (less than 1 mm) crystal mirror being further applied to the concave portion of the parabola.

The second embodiment consists of a reflecting parabola including a central fretted aluminium layer, on the opposite faces thereof are applied two further respective aluminium layers, one of which is made of a reflecting aluminium material obtained by depositing vapors and being protected by a few micron thickness sol-gel material.

As clearly shown, the parabolic mirrors are made starting from a laminated material 20, including a central aluminium fretted portion 21, on the opposite faces of which are applied layers 22, also made of aluminium.

According to the present invention, the reflecting surface 23 comprises a colloidal suspension, adapted to solidify to a gel consistency.

The thus made porous product is chemically purified and heated to high temperatures, thereby providing high purity oxides.

To the thus formed gel further doping substances are advantageously added to provide the made glass like solid material with particular properties, the set glass material practically providing a very thin metal oxide coating.

The depositing is performed on the natural anodized aluminium of the layers 22, by depositing vapors to a thickness from 0 to 10 microns, thereby providing a reflectivity with a reflection loss of maximum 2%.

Said colloidal suspension is so arranged as to practically provide a very thin lawyer, having a surface similar to a paint or glass material.

As is known the words "sol-gel" indicate a colloidal suspension adapted to solidify to form a gel.

The thus made porous material is chemically purified and heated to a high temperature, for forming high purity oxides.

Also in this second embodiment it is possible to add other doping substances, to provide the made glass like solid material, with desired properties, and depositing method is carried on a natural anodized aluminium material by PVD technology (physical vapour deposition).

Within the receiving tube 3 a thermal carrier fluid is arranged.

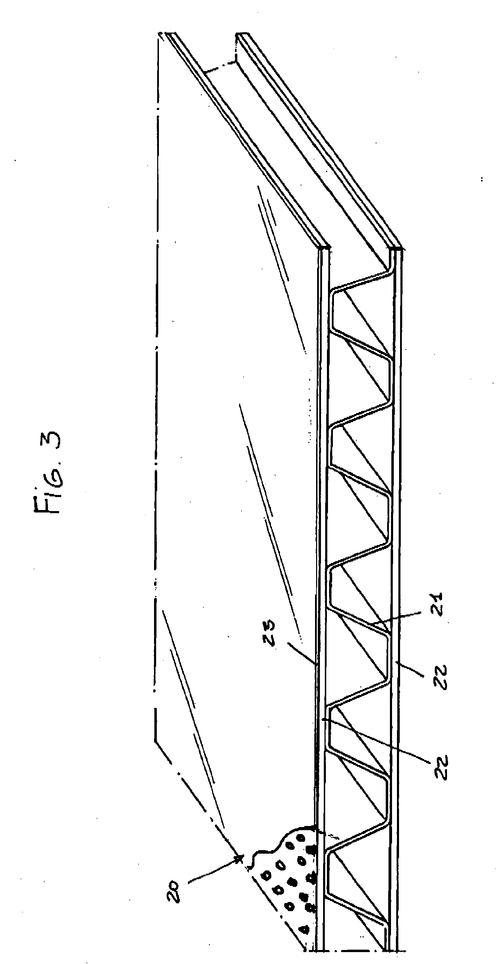

As shown in figure 3, the top metal sheet 22 thereon the reflecting surface 23 is applied, can be so perforated as to compensate thermal expansions, to provide a reflecting parabolic device having very light and highly functional construction.

The invention, as disclosed, is susceptible to several modifications and variations, all of which will come within the scope of the invention.

Moreover, all the details can be replaced by other technically equivalent elements.

In practicing the invention, the used materials, as well as the contingent size and shapes, can be any, depending on requirements.

## Claims

1. A parabolic solar radiation reflecting construction for solar energy heating systems, comprising at least a reflecting parabola for concentrating solar beams on a receiver tube containing a thermal carrier fluid therein, **characterized in that** said parabola comprises a central aluminium fretted layer having opposite faces on each of which is applied a respective aluminium reflecting layer, said parabola having a parabola concave portion coated by a thin crystal mirror.

2. A reflecting parabolic construction, according to claim 1, **characterized in that** said aluminium layer is made by depositing vapors and is protected by a sol-gel protective layer having a thickness of few microns.

3. A reflecting parabolic construction, according to claim 1, **characterized in that** said reflecting parabola has a reflecting surface including a colloidal suspension capable of solidifying to a gel form.

4. A reflecting parabolic construction, according to claim 2, **characterized in that** said vapors are deposited on natural anodized aluminium to a thickness from 0 to 10 microns, to provide said aluminium layer with a reflectivity having a maximum reflectivity loss of 2%.

5. A reflecting parabolic construction, according to claim 3, **characterized in that** said colloidal suspension is deposited to a very thin colloidal suspension layer with a surface similar to that of a paint or glass material.

6. A reflecting parabolic construction, according to claim 4, **characterized in that** said natural anodized aluminium is treated by a physical vapor deposition method.

7. A reflecting parabolic construction, according to claim 1, **characterized in that** said construction comprises a top metal sheet element coated by a reflecting surface and comprising a plurality of holes for compensating thermal expansions.
